# EUROPEAN PATENT SPECIFICATION

(11) **EP 2 662 203 B1**
(45) Date of publication and mention of the grant of the patent: **02.10.2019**
(21) Application number: 13166794.1
(22) Date of filing: 07.05.2013
(51) Int. Cl.: B29C 70/44, B29C 33/38

(54) **Contour caul with expansion region and method for its manufacture**
Konturiertes Druckstück mit Expansionsbereich und Verfahren zu dessen Herstellung
Plaque de presse contourée avec zone d'expansion et procédé de sa fabrication

(30) Priority: 08.05.2012 US 201213466948
(43) Date of publication of application: 13.11.2013
(73) Proprietor: Lockheed Martin Corporation, Bethesda, MD 20817-1877 (US)
(72) Inventor: Piedmont, Gregory, Helendale, CA 92342 (US)
(74) Representative: Epping - Hermann - Fischer

(56) References cited:
- US-A- 5 645 670
- US-A- 5 817 269
- US-A1- 2008 116 618

## Description

### BACKGROUND

The present disclosure generally relates to contour cauls, for example as used in composite manufacturing processes.

A composite structure in the form of a laminate can be made from reinforcing fibers combined with a resin. Uses for such composite structures include aircraft parts, spacecraft parts, and other applications where strong, light, and durable structures are useful.

Vacuum bagging can be used in composite manufacturing processes. For example, a vacuum bag can be placed around a composite structure during manufacturing, and air can be evacuated from the bag. The resulting pressure on the composite structure can help remove entrapped air and excess resin from the laminate and can also compact the laminate. Heat can be applied to enhance these effects and to harden the laminate.

A "contour caul" can be placed between the vacuum bag and the composite structure in order to help even out the pressure on the laminate.

Document US2008/0116618 A1 discloses a composite forming tool permitting differential expansion of different portions of the tool.

### SUMMARY

A contour caul system is provided according to claim 1.

A method of making a contour caul is provided according to claim 8.

According to additional aspects of the present disclosure, a method of making a composite structure is provided. The method includes placing a composite structure in a contour caul. The contour caul includes two or more higher Tg regions that follow geometries of the composite structure and an expansion region located between the higher Tg regions. The expansion region has a lower glass-liquid transition temperature than the higher Tg regions. The method also includes evacuating air from about the contour caul and the composite structure, and applying heat to the contour caul and the composite structure. The heat causes the expansion region to transition at least partially to a more flexible state than the higher Tg regions of the contour caul.

It is understood that other configurations of the subject technology will become readily apparent to those skilled in the art from the following detailed description, wherein various configurations of the subject technology are shown and described by way of illustration. As will be realized, the subject technology is capable of other and different configurations and its several details are capable of modification in various other respects, all without departing from the scope of the subject technology. Accordingly, the drawings and detailed description are to be regarded as illustrative in nature and not as restrictive.

### BRIEF DESCRIPTION OF THE DRAWINGS

The accompanying drawings, which are included to provide further understanding and are incorporated in and constitute a part of this specification, illustrate disclosed embodiments and together with the description serve to explain the principles of the disclosed embodiments. In the drawings:
FIG. 1 illustrates an example of a pre-fit contour caul used when curing a composite structure according to the invention.
FIG. 2 shows another example of a pre-fit contour caul used when curing a composite structure according to certain aspects of the disclosure.
FIG. 3 shows an example of an arrangement of a composite structure and a contour caul according to certain aspects of the disclosure.
FIG. 4 is a flowchart illustrating an example of a process for making a composite structure using a contour caul according to certain aspects of the disclosure.
FIG. 5 shows an example of an arrangement used to make a directed force compression stiffener for a contour caul according to certain aspects of the disclosure.
FIG. 6 shows an example of a directed force compression stiffener made using the arrangement shown in FIG. 5.
FIG. 7 is a flowchart illustrating an example of making a composite structure using a contour caul according to certain aspects of the disclosure.
FIG. 8 is a flowchart illustrating another example of making a composite structure using a contour caul according to certain aspects of the disclosure.

### DETAILED DESCRIPTION

In the following detailed description, numerous specific details are set forth to provide a full understanding of the present disclosure. It will be apparent, however, to one ordinarily skilled in the art that the embodiments of the present disclosure may be practiced without some of these specific details. In other instances, well-known structures and techniques have not been shown in detail so as not to obscure the disclosure.

A composite structure in the form of a laminate can be made from reinforcing fibers combined with a resin. Uses for such composite structures include aircraft parts, spacecraft parts, and other applications where strong, light, and durable structures are useful.

Vacuum bagging can be used in composite manufacturing processes. For example, a vacuum bag can be placed around a composite structure during manufacturing, and air can be evacuated from the bag. The resulting pressure on the composite structure can help remove entrapped air and excess resin from the laminate and can also compact the laminate. Heat can be applied to enhance these effects and to harden the laminate.

A "contour caul" according to aspects of the disclosure is placed between the vacuum bag and the composite structure in order to help even out the pressure on the laminate. The caul can be form fitted within the composite structure prior to bonding processes and then removed until needed. For example, after Pi preforms (i.e., π shaped structures that can be used to join two structures) are in place on the structure, the caul can be placed back on the structure.

If the composite structure has a complex geometry, the contour caul applies more pressure to some parts of the structure than others. For example, in some composite structures with pieces joined by Pi preforms, two corners of the structure can be close enough together that a contour caul cannot apply even pressure to both corners. Instead, the caul might be pulled away from one corner by being pressed into another corner, possibly preventing adequate overall compaction.

Aspects of the subject technology address this issue by including an expansion region or joint in a contour caul. The expansion region can be formed in the caul by using a different resin from the rest of the caul that has a lower gas-liquid transition temperature Tg. The gas-liquid transition that occurs at Tg is a reversible transition in amorphous materials from a hard state into a molten or rubber-like state.

A contour caul according to the invention includes more than two higher Tg regions that follow geometries of a composite structure and expansion regions located between the higher Tg regions. The expansion regions have a lower glass-liquid transition temperature than the higher Tg regions.

Such expansion regions form low Tg points within the caul. When heat is applied during a vacuum bag curing process, a glass-liquid transition of an expansion region allows for movement of other parts of a contour caul, thereby permitting the higher Tg and therefore harder portions of the caul to move into complex geometries such as adjacent corners before the laminate hardens. Both lower Tg and higher Tg regions can form enhanced contours at different times during a cure cycle, with the higher Tg regions maintaining a greater degree of rigidity beyond the gel point of the lower Tg regions.

In addition, as the laminate cures and compacts, the expansion regions of the caul permit the harder portions of the caul to move and to continue to apply pressure to the composite structure. This continued movement and pressure can allow the caul to match subtle structures in the laminate.

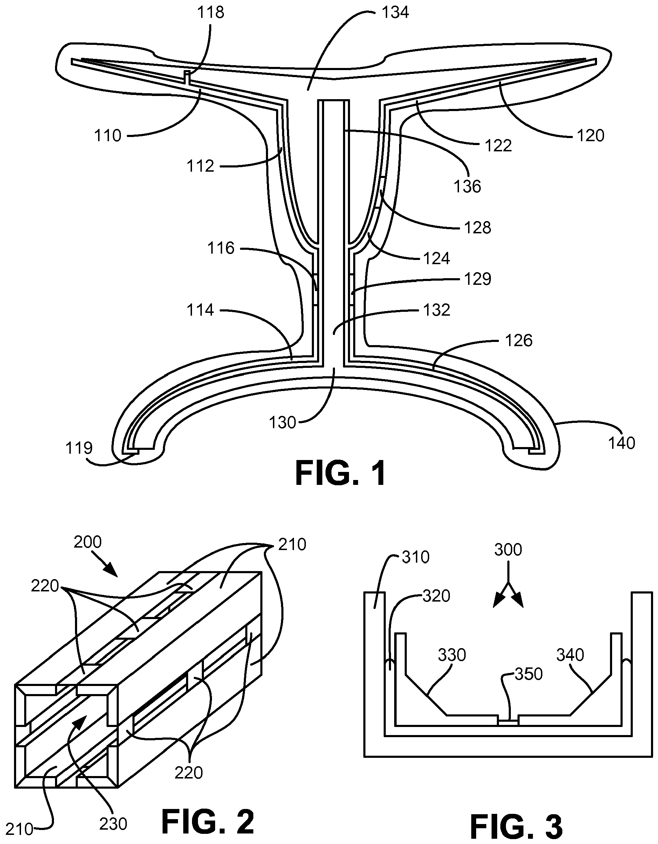

FIG. 1 shows examples of contour cauls 110 and 120 placed on composite structure 130 inside vacuum bag 140. In FIG. 1, spaces between the cauls and the composite structure are depicted for purpose of clarity. According to aspects of the subject technology, the cauls can be made so that very little if any space exists between a caul and a composite structure that the caul is designed to fit.

An arrangement as shown in FIG. 1 can be used to cure a composite structure formed of a laminate including reinforcing fibers embedded in a resin in order to manufacture a product. Examples of such reinforcing fibers include but are not limited to carbon fibers, glass fibers, and cellulous fibers. Many other types of fibers also can be used.

Composite structure 130 in FIG. 1 is made of two pieces 132 and 134. These two pieces are joined together by Pi joint 136 that in turn includes a Pi preform (i.e., a π shaped structure) on one piece and a tang on the other piece that fits within the Pi preform. The pieces can be joined by the Pi joint before they have been fully cured, before they have been cured at all, or after they have been cured. An adhesive can be added. The joined pieces can then be cured together, resulting in a single piece.

Failure to properly cure a Pi joint can lead to a weakened joint, creating a potential for a catastrophic failure. For example, if the Pi joint is used to join parts of a composite structure for part of an aircraft, a weakened Pi joint could lead to an aircraft crash. The present disclosure is not limited to prevention of catastrophic failures.

Caul 110 can help with curing of a composite structure. Caul 110 includes both higher Tg (glass or glass-liquid transition temperature) regions 112 and 114 and an expansion joint 116 situated between the higher Tg regions. The expansion region has a lower glass-liquid transition temperature than the higher Tg regions. When heated during curing, the expansion region becomes softer and/or more flexible than the higher Tg regions, while the higher Tg regions remains relatively harder. The softer and/or more flexible expansion regions permit the higher Tg regions to be more evenly pressed into corners and other complex geometries of a composite structure and/or to concentrate pressure into such corners. The higher Tg materials can also press more evenly or concentrate pressure into other areas containing angles, for example angles near or less than 90 degrees.

In the case of a composite structure made of multiple pieces, a caul includes higher Tg regions following corners and other complex geometries of each piece. This is illustrated in FIG. 1, where caul 110 includes higher Tg regions for corners of both piece 132 and 134.

More than one expansion region is included in a caul according to the invention. Thus, caul 120 is shown with expansion regions 128 and 129. Expansion region 128 is situated between higher Tg regions 122 and 124. Likewise, expansion region 129 is situated between higher Tg regions 124 and 126. Inclusion of multiple expansion regions can help even out pressure applied during curing even for very complex structures. Thus, a caul that includes higher Tg regions and expansion regions can function as a singular assembly of pressure intensifiers for curing even complex composites structures.

The regions of contour cauls according to aspects of the disclosure can be made from many materials. One example of a suitable material includes epoxies. One example of a suitable epoxy for an expansion region according to aspects of the disclosure is West Systems 105/206 Epoxy. Other epoxies and materials other than epoxies can be used.

According to further aspects of the disclosure, locating pins can be incorporated into a surface of a contour caul. The locating pins can position the contour caul on a composite structure. Examples of such locating pins are shown in FIG. 1 as pins 118 and 119. The pins can be placed to align with some feature or element of the composite structure. The pins can help position the caul properly on a composite structure for curing. According to aspects of the disclosure, the pins also can help support pieces of a composite structure in a proper position before curing.

Contour cauls such as those shown in FIG. 1 also can be used when curing composite structures that include a single piece. More expansion regions in the caul can help provide more even pressure to complex geometries of that piece

FIG. 2 shows another example of a pre-fit contour caul used when curing a composite structure according to certain aspects of the disclosure. Caul 200 includes higher Tg regions 210. These regions can be pre-fit with dry Pi preforms. Caul 200 also includes lower Tg regions 220 that form expansion joints.

Caul 200 in FIG. 2 is arranged to fit within a composite structure. A vacuum bag can be placed through open region 230 of the caul and then sealed around the caul and the composite structure. The composite structure can then be cured by evacuation of air and application of heat. During curing, higher Tg regions 210 remain relatively harder than lower Tg regions 220. The higher Tg regions apply pressure to the composite structure while the lower Tg regions become relatively softer and allow movement of the higher Tg regions. The lower Tg regions also can apply pressure to the composite structure during curing.

As the composite structure cures, a laminate forming or being added to the composite structure can compact. The lower Tg regions permit the higher Tg regions to follow this compaction, allowing the contour caul to follow subtle changes and structures within the composite structure. The disclosure is not limited to cauls that follow such subtle changes and structures.

FIG. 3 shows an arrangement of a composite structure and a contour caul according to certain aspects of the disclosure. Caul 300 in FIG. 3 follows a shape of a partially complete composite structure 310. Layer of laminate 320 has been applied to the partially complete composite structure in FIG. 3. This layer of laminate could include Pi preforms, could have been applied using lay-up processes, or could have been added to the composite structure in any other manner. During curing of the arrangement shown in FIG. 3, higher Tg regions 330 and 340 apply pressure to the laminate, and lower Tg region 350 forms an expansion joint allowing the higher Tg regions to follow compaction of the layer of laminate and structures in the laminate.

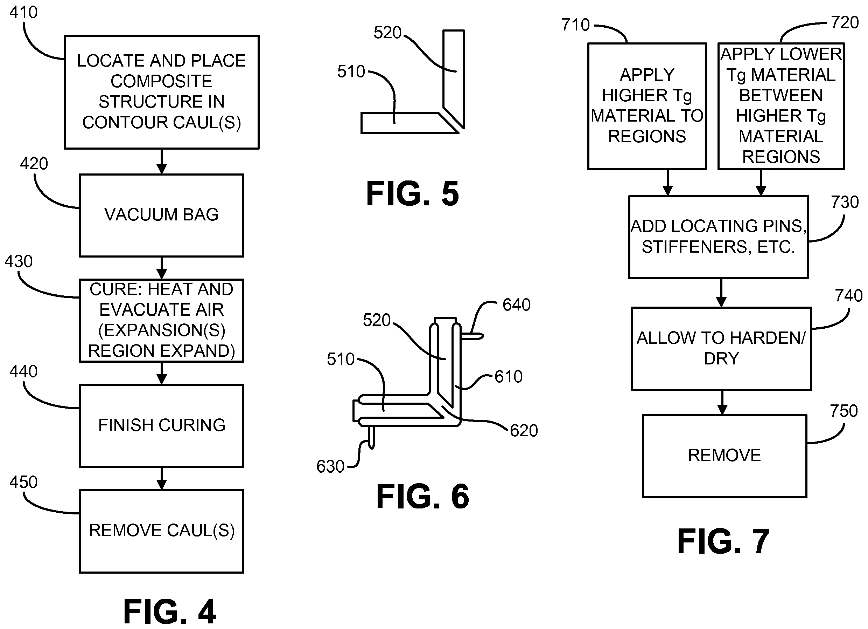

FIG. 4 is a flowchart illustrating an example of a process for making a composite structure using a contour caul. In some aspects, a method of making a composite structure includes placing a composite structure in a contour caul. The contour caul includes two or more higher Tg regions that follow geometries of the composite structure and an expansion region located between the higher Tg regions. The expansion region has a lower glass-liquid transition temperature than the higher Tg regions. The method also includes evacuating air from about the contour caul and the composite structure, and applying heat to the contour caul and the composite structure. The heat causes the expansion region to transition at least partially to a more flexible state than the higher Tg regions of the contour caul.

In step 410, a composite structure composed of one or more pieces is positioned and placed in one or more contour cauls according to aspects of the disclosure, for example using locating pins. Such pins do not necessarily have to be used. Alternatively, the contour cauls can be positioned and placed on a composite structure in step 410.

A vacuum bag is placed around the composite structure and caul(s) in step 420. Curing of the composite structure begins in step 430. Curing can begin by evacuating air from the vacuum bag to apply pressure to the composite structure and applying heat. One or more expansion regions in caul(s) according to aspects of the subject technology soften due to the heat, which in turn can improve application of the pressure to complex geometries of the composite structure.

Pressure and heat can be maintained until the composite structure finishes curing in step 440. As the structure cures, the lower Tg regions can permit the higher Tg regions to follow compaction of laminates that make up or are being applied to the composite structure. Both the higher and lower Tg regions can form enhanced contours at different times during curing, with the higher Tg regions maintaining a greater degree of rigidity beyond the gel point of the lower Tg regions. The composite structure can be removed from the caul(s) in step 450.

Contour cauls according to aspects of the subject technology can be used in other ways than those described above with respect to FIG. 4.

FIG. 5 shows an example of an arrangement that can be used to make a directed force compression stiffener for a contour caul according to certain aspects of the disclosure. FIG. 6 shows an example of a directed force compression stiffener made using the arrangement shown in FIG. 5. Such a directed force compression stiffener can enhance pressure applied by a higher Tg region of a contour caul according to aspects of the disclosure.

FIG. 5 shows two pieces 510 and 520 of a soft material formed to follow a corner of a composite structure. An example of the soft material includes but is not limited to white needled polyester felt. Various thicknesses of the material can be used, for example but not limited to 1/4", 1/2", 3/4", 1", etc. A higher Tg material 610 has been applied to two pieces 510 and 520 of the softer material in FIG. 6. A region between the pieces has been filled with this material, forming directed force compression stiffener 620. This stiffener can be included in a corner of a higher Tg region of a compression caul according to aspects of the disclosure. The stiffener can enhance pressure applied by the higher Tg region during curing of a composite structure.

FIG. 6 also shows two locating pins 630 and 640 affixed in or onto higher Tg material 610. These pins can be used to locate a composite structure on a contour caul that include stiffener 620 according to aspects of the disclosure.

FIG. 7 is a flowchart illustrating an example of making a composite structure using a contour caul. In some aspects, a method of making a contour caul includes applying a higher Tg material and a lower Tg material to a composite structure, the higher Tg material having a higher glass-liquid transition temperature than the lower Tg material, and the lower Tg material being applied between regions where the higher Tg material is applied. The method also includes allowing the higher Tg material and the lower Tg material to harden to form the contour caul and removing the contour caul from the composite structure.

In step 710, a higher Tg material is applied to a composite structure, for example before curing. The higher Tg material can be applied to more complex structures such as corners according to aspects of the disclosure. A lower Tg material that will form expansion regions is applied in step 720. Examples of higher Tg and lower Tg materials include but are not limited to different epoxies with different transition temperature points. These steps do not have to be performed in any particular order and can be performed simultaneously.

Locating pins can be added to the contour caul in step 730. When the higher and lower Tg materials harden, the pins can become trapped by the materials. Directed force compression stiffeners and other structures also can be added in a like manner. Alternatively, such structures can be added using other approaches, and the structures can be added at other points in the process illustrated by Fig. 7.

In step 740, the materials are allowed to harden, for example by drying. The now hardened materials form a compression caul according to aspects of the disclosure. The caul can removed from the composite structure in step 740 for later use, for example after additional parts or elements have been added to the composite structure.

The process shown in FIG. 7 pre-fits a contour caul according to aspects of the disclosure to conform to a composite structure during curing. In some aspects, the caul may not be shaped to fully conform to a composite structure during curing. For example, Pi preforms may be added to a composite structure after a caul for the structure is made. According to aspects of the present technology, such a caul can intensify pressure on elements added after the caul is made, which in turn can enhance a strength of those elements. In other aspects, a caul can be shaped to fully conform to a composite structure during curing.

Contour cauls according to aspects of the subject technology can be made in other ways than those described above with respect to FIG. 7.

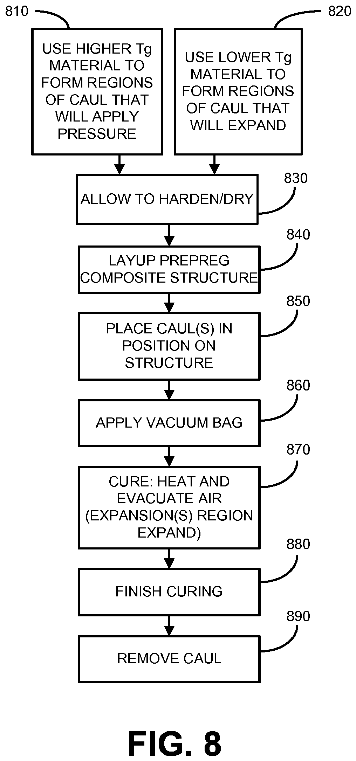

FIG. 8 is a flowchart illustrating another example of making a composite structure using a contour caul. In steps 810, a higher Tg material is applied to a composite structure or a form for a composite structure. The higher Tg material is applied to form regions of the caul that will apply pressure to the composite structure. A lower Tg material that will form expansion regions is applied in step 820. Examples of higher Tg and lower Tg materials include but are not limited to different epoxies with different transition temperature points. In some aspects, the materials can be applied in liquid form in steps 810 and 820. These steps do not have to be performed in any particular order and can be performed simultaneously.

In some aspects, addition components can be added to the higher and lower Tg materials before, during, or after steps 810 and 820. Examples of such structures include but are not limited to directed force compression stiffeners and locating pins.

In step 830, the materials are allowed to harden, for example by drying. The now hardened materials form a compression caul according to aspects of the disclosure.

A laminate is applied to a composite structure or a form in step 840. For example, prepreg (i.e., reinforcing fibers pre-pregnated with resin) can be layed up, sprayed, or applied to the composite structure or form in any other manner. The resin and reinforcing fibers form a laminate on the composite structure. One or more contour cauls are applied to the laminate on the composite structure in step 850.

A vacuum bag is placed around the composite structure and caul(s) in step 860. Curing of the composite structure begins in step 870. Curing can begin by evacuating air from the vacuum bag to apply pressure to the composite structure and applying heat. One or more expansion regions in caul(s) according to aspects of the subject technology soften due to the heat, which in turn can improve application of the pressure to complex geometries of the composite structure.

Pressure and heat can be maintained until the composite structure finishes curing in step 880. As the structure cures, the lower Tg regions can permit the higher Tg regions to follow compaction of laminates that make up or are being applied to the composite structure. Both the higher and lower Tg regions can form enhanced contours at different times during curing, with the higher Tg regions maintaining a greater degree of rigidity beyond the gel point of the lower Tg regions. The composite structure can be removed from the caul(s) in step 890.

Contour cauls according to aspects of the subject technology can be used in other ways than those described above with respect to FIG. 8.

## Claims

1. A contour caul system comprising:
a first contour caul (110) having first and second higher glass-liquid transition temperature (Tg) regions (112, 114) that each follow corner geometries of a first portion of a composite structure, the first contour caul (110) further comprising a first expansion region (116) located between the first and second higher Tg regions (112, 114), the first expansion region (116) having a lower glass-liquid transition temperature than the first and second higher Tg regions (112, 114),
**characterised in that** it further comprises:
a second contour caul (120) having third, fourth, and fifth higher Tg regions (122, 124, 126) that each follow corner geometries of a second portion of the composite structure, the second contour caul (120) further comprising a second expansion region (128) located between the third and fourth higher Tg regions (122, 124) and a third expansion region (129) situated between the fourth and fifth higher Tg regions (124, 126), the second and third expansion regions (128, 129) having a lower glass-liquid transition temperature than the third, fourth, and fifth higher Tg regions (122, 124, 126).

2. The contour caul system of claim 1, wherein at least one of the higher Tg regions that follows the corner geometry of the composite structure further comprises a directed force compression stiffener.

3. The contour caul system of claim 1, wherein the composite structure further comprises at least two pieces joined together, and the contour caul system is pre-fit to the composite structure when the two pieces are joined.

4. The contour caul system of claim 3, wherein the two pieces are joined by a Pi joint.

5. The contour caul system of claim 1, further comprising at least one locating pin incorporated into a surface of the first contour caul (110) that positions the first contour caul (110) on the composite structure.

6. The contour caul system of claim 1, wherein the first, second, third, fourth, and fifth higher Tg regions (112, 114, 122, 124, 126) comprise substantially perpendicular corner geometries.

7. The contour caul system of claim 1, wherein the first, second, third, fourth, and fifth higher Tg regions (112, 114, 122, 124, 126) comprise arcuate geometries.

8. A method of making a contour caul (120), comprising:
applying a higher Tg material and a lower Tg material to a composite structure, the higher Tg material comprising first, second, and third higher Tg regions (122, 124, 126) that each follow corner geometries of a first portion of the composite structure, the lower Tg material comprising first and second expansion regions (128, 129), the higher Tg material having a higher glass-liquid transition temperature than the lower Tg material, and the first expansion region (128) is located between the first and second higher Tg regions (122, 124) and the second expansion region (129) is situated between the second and third higher Tg regions (124, 126); and
allowing the higher Tg material and the lower Tg material to harden to form the contour caul (120).

9. The method of claim 8, further comprising removing the contour caul (120) from the composite structure.

10. The method of claim 8, wherein the higher Tg material and the lower Tg material comprise different epoxies.

11. The method of claim 8, further comprising adding a directed force compression stiffener to the higher Tg material applied to at least one corner geometry of the composite structure.

12. The method of claim 8, wherein the composite structure comprises at least two pieces joined together.

13. The method of claim 12, wherein the two pieces are joined by a Pi joint.

14. The method of claim 12, wherein at least the first higher Tg region (122) of the contour caul (120) follows a geometry in a first piece of the composite structure, and at least the second higher Tg region (124) of the contour caul (120) follows a geometry in a second piece of the composite structure.

## Patentansprüche

1. System mit konturiertem Druckstück, aufweisend:
ein erstes konturiertes Druckstück (110) mit einem ersten und zweiten höheren Glas-Flüssigkeits-Übergangstemperatur-(Tg)-Bereich (112, 114), die jeweils Eckgeometrien eines ersten Abschnitts einer Verbundstruktur folgen, wobei das erste konturierte Druckstück (110) darüber hinaus einen ersten Expansionsbereich (116) aufweist, der sich zwischen dem ersten und zweiten höheren Tg-Bereich (112, 114) befindet, wobei der erste Expansionsbereich (116) eine niedrigere Glas-Flüssigkeits-Übergangstemperatur aufweist als der erste und zweite höhere Tg-Bereich (112, 114),
**dadurch gekennzeichnet, dass** es darüber hinaus aufweist:
ein zweites konturiertes Druckstück (120) mit einem dritten, vierten und fünften höheren Tg-Bereich (122, 124, 126), die jeweils Eckgeometrien eines zweiten Abschnitts der Verbundstruktur folgen, wobei das zweite konturierte Druckstück (120) ferner einen zweiten Expansionsbereich (128) aufweist, der sich zwischen dem dritten und vierten höheren Tg-Bereich (122, 124) befindet, und einen dritten Expansionsbereich (129), der zwischen dem vierten und fünften höheren Tg-Bereich (124, 126) angeordnet ist, wobei der zweite und dritte Expansionsbereich (128, 129) jeweils eine niedrigere Glas-Flüssigkeits-Übergangstemperatur hat als der dritte, vierte und fünfte höhere Tg-Bereich (122, 124, 126).

2. System mit konturiertem Druckstück nach Anspruch 1, wobei mindestens einer der höheren Tg-Bereiche, der der Eckgeometrie der Verbundstruktur folgt, darüber hinaus ein Richtkraftkompressionsversteifungsteil aufweist.

3. System mit konturiertem Druckstück nach Anspruch 1, wobei die Verbundstruktur ferner mindestens zwei miteinander verbundene Teile aufweist und das System mit konturiertem Druckstück an die Verbundstruktur vorangepasst ist, wenn die beiden Teile miteinander verbunden sind.

4. System mit konturiertem Druckstück nach Anspruch 3, wobei die beiden Teile durch eine Pi-Verbindung miteinander verbunden sind.

5. System mit konturiertem Druckstück nach Anspruch 1, ferner mindestens einen in eine Oberfläche des ersten konturierten Druckstücks (110) eingearbeiteten Positionierungsstift aufweisend, der das erste konturierte Druckstück (110) an der Verbundstruktur positioniert.

6. System mit konturiertem Druckstück nach Anspruch 1, wobei der erste, zweite, dritte, vierte und fünfte höhere Tg-Bereich (112, 114, 122, 124, 126) im Wesentlichen senkrechte Eckgeometrien aufweisen.

7. System mit konturiertem Druckstück nach Anspruch 1, wobei der erste, zweite, dritte, vierte und fünfte höhere Tg-Bereich (112, 114, 122, 124, 126) gekrümmte Geometrien aufweisen.

8. Verfahren zur Herstellung eines konturierten Druckstücks (120), umfassend:
Anlegen eines höheren Tg-Materials und eines niedrigeren Tg-Materials an eine Verbundstruktur, wobei das höhere Tg-Material einen ersten, zweiten und dritten höheren Tg-Bereich (122, 124, 126) aufweist, die jeweils Eckgeometrien eines ersten Abschnitts der Verbundstruktur folgen, wobei das niedrigere Tg-Material einen ersten und einen zweiten Expansionsbereich (128, 129) aufweist, das höhere Tg-Material eine höhere Glas-Flüssigkeits-Übergangstemperatur als das niedrigere Tg-Material hat, und der erste Expansionsbereich (128) sich zwischen dem ersten und zweiten höheren Tg-Bereich (122, 124) befindet und der zweite Expansionsbereich (129) zwischen dem zweiten und dritten höheren Tg-Bereich (124, 126) angeordnet ist; und
das höhere Tg-Material und das niedrigere Tg-Material aushärten zu lassen, um das konturierte Druckstück (120) zu bilden.

9. Verfahren nach Anspruch 8, darüber hinaus das Entfernen des konturierten Druckstücks (120) von der Verbundstruktur umfassend.

10. Verfahren nach Anspruch 8, wobei das höhere Tg-Material und das niedrigere Tg-Material verschiedene Epoxide aufweisen.

11. Verfahren nach Anspruch 8, darüber hinaus umfassend, dem höheren Tg-Material, das an mindestens eine Eckgeometrie der Verbundstruktur angelegt ist, ein Richtkraftkompressionsversteifungsteil hinzuzufügen.

12. Verfahren nach Anspruch 8, wobei die Verbundstruktur mindestens zwei miteinander verbundene Teile aufweist.

13. Verfahren nach Anspruch 12, wobei die beiden Teile durch eine Pi-Verbindung miteinander verbunden werden.

14. Verfahren nach Anspruch 12, wobei zumindest der erste höhere Tg-Bereich (122) des konturierten Druckstücks (120) einer Geometrie in einem ersten Teil der Verbundstruktur folgt und zumindest der zweite höhere Tg-Bereich (124) des konturierten Druckstücks (120) einer Geometrie in einem zweiten Teil der Verbundstruktur folgt.

## Revendications

1. Système de plaques de presse contourées comprenant :
une première plaque de presse contourée (110) présentant des première et deuxième zones à température de transition de liquide de verre (Tg) supérieure (112, 114) qui suivent chacune des géométries de coin d'une première portion d'une structure composite, la première plaque de presse contourée (110) comprenant en outre une première zone d'expansion (116) située entre les première et deuxième zones à Tg supérieure (112, 114), la première zone d'expansion (116) ayant une température de transition liquide de verre inférieure aux première et deuxième zones à Tg supérieure (112, 114),
**caractérisé en ce qu'**il comprend en outre :
une deuxième plaque de presse contourée (120) présentant des troisième, quatrième, et cinquième zones à Tg supérieure (122, 124, 126) qui suivent chacune des géométries de coin d'une deuxième portion de la structure composite, la deuxième plaque de presse contourée (120) comprenant en outre une deuxième zone d'expansion (128) située entre les troisième et quatrième zones à Tg supérieure (122, 124) et une troisième zone d'expansion (129) située entre les quatrième et cinquième zones à Tg supérieure (124, 126), les deuxième et troisième zones d'expansion (128, 129) ayant une température de transition liquide de verre inférieure aux troisième, quatrième, et cinquième zones à Tg supérieure (122, 124, 126) .

2. Le système de plaques de presse contourées de la revendication 1, sachant qu'au moins une des zones à Tg supérieure qui suivent la géométrie de coin de la structure composite comprend en outre un raidisseur à compression à force dirigée.

3. Le système de plaques de presse contourées de la revendication 1, sachant que la structure composite comprend en outre au moins deux pièces assemblées, et le système de plaques de presse contourées est préajusté sur la structure composite lorsque les deux pièces sont assemblées.

4. Le système de plaques de presse contourées de la revendication 3, sachant que les deux pièces sont assemblées par un joint Pi.

5. Le système de plaques de presse contourées de la revendication 1, comprenant en outre au moins une goupille de mise en place incorporée dans une surface de la première plaque de presse contourée (110) qui positionne la première plaque de presse contourée (110) sur la structure composite.

6. Le système de plaques de presse contourées de la revendication 1, sachant que les première, deuxième, troisième, quatrième, et cinquième zones à Tg supérieure (112, 114, 122, 124, 126) comprennent des géométries de coin sensiblement perpendiculaires.

7. Le système de plaques de presse contourées de la revendication 1, sachant que les première, deuxième, troisième, quatrième, et cinquième zones à Tg supérieure (112, 114, 122, 124, 126) comprennent des géométries arquées.

8. Procédé de fabrication d'une plaque de presse contourée (120), comprenant :
l'application d'un matériau à Tg supérieure et d'un matériau à Tg inférieure à la structure composite, le matériau à Tg supérieure comprenant des première, deuxième, et troisième zones à Tg supérieure (122, 124, 126) qui suivent chacune des géométries de coin d'une première portion de la structure composite, le matériau à Tg inférieure comprenant des première et deuxième zones d'expansion (128, 129), le matériau à Tg supérieure ayant une température de transition liquide de verre supérieure au matériau à Tg inférieur, et la première zone d'expansion (128) est située entre les première et deuxième zones à Tg supérieure (122, 124) et la deuxième zone d'expansion (129) est située entre les deuxième et troisième zones à Tg supérieure (124, 126) ; et
le fait de permettre au matériau à Tg supérieure et au matériau à Tg inférieure de durcir pour former la plaque de presse contourée (120).

9. Le procédé de la revendication 8, comprenant en outre l'enlèvement de la plaque de presse contourée (120) de la structure composite.

10. Le procédé de la revendication 8, sachant que le matériau à Tg supérieure et le matériau à Tg inférieure comprennent des époxys différents.

11. Le procédé de la revendication 8, comprenant en outre l'ajout d'un raidisseur à compression à force dirigée au matériau à Tg supérieure appliqué à au moins une géométrie de coin de la structure composite.

12. Le procédé de la revendication 8, sachant que la structure composite comprend au moins deux pièces assemblées.

13. Le procédé de la revendication 12, sachant que les deux pièces sont assemblées par un joint Pi.

14. Le procédé de la revendication 12, sachant qu'au moins la première zone à Tg supérieure (122) de la plaque de presse contourée (120) suit une géométrie dans une première pièce de la structure composite, et au moins la deuxième zone à Tg supérieure (124) de la plaque de presse contourée (120) suit une géométrie dans une deuxième pièce de la structure composite.
